# EUROPÄISCHE PATENTANMELDUNG

(11) **EP 1 203 932 A1**
(43) Veröffentlichungstag der Anmeldung: **08.05.2002**
(21) Anmeldenummer: 01124990.1
(22) Anmeldetag: 19.10.2001
(51) Int. Cl.: G01D 5/14

(54) **Drehstellungsgeber**

(30) Priorität: 03.11.2000 DE 10054470
(71) Anmelder: SIEMENS AKTIENGESELLSCHAFT, 80333 München (DE)
(72) Erfinder: Siess, Rainer, 91054 Erlangen (DE)

(57) **Zusammenfassung**

Eine Drehstellung eines Drehelements (2) wird mittels einer Sensoranordnung (1) mit mehreren Sensoren (6-8) und einer diesen nachgeordneten Auswerteschaltung (10) erfasst. Von den Sensoren (6-8) sind in jeder Drehstellung des Drehelements (2) simultan Rohsignale lieferbar, anhand derer ermittelbar ist, um welchen Winkelbereich (11-13) das Drehelement (2) verdreht ist. Von einem Energieerzeugungssystem (14) werden so oft Energiepulse an die Sensoranordnung (1) abgegeben, dass anhand der erfassten Winkelbereiche (11-13) eine Drehrichtungserkennung des Drehelements (2) möglich ist.

## Beschreibung

Die vorliegende Erfindung betrifft einen Drehstellungsgeber zum Erfassen einer Drehstellung eines um eine Drehachse drehbaren Drehelements, wobei der Drehstellungsgeber eine Sensoranordnung mit mindestens zwei Sensoren und einer den Sensoren nachgeordneten Auswerteschaltung aufweist, mittels derer die Drehstellung des Drehelements relativ zu einer Referenzstellung des Drehelements erfassbar ist, wobei von den Sensoren Rohsignale lieferbar sind, wobei zumindest bei einer langsamen Drehbewegung von einem ersten Energieerzeugungssystem zwangsweise Energiepulse an die Sensoranordnung abgegeben werden, aufgrund derer die Sensoranordnung jeweils solange betreibbar ist, dass die Drehstellung des Drehelements, um die das Drehelement bei Abgabe des Energiepulses relativ zur Referenzstellung verdreht ist, ermittelbar ist, wobei das erste Energieerzeugungssystem und das Drehelement miteinander gekoppelt sind.

Ein derartiger Drehstellungsgeber ist aus der EP 0 658 745 B1 bekannt.

Bei dem genannten Stand der Technik ist das erste Energieerzeugungssystem mit der Sensoranordnung identisch. Das erste Energieerzeugungssystem wird stets dann angesteuert, wenn das Drehelement relativ zur Sensoranordnung eine vorbestimmte Stellung erreicht. Zwischen diesen Stellungen ist keine Erfassung der Drehstellung möglich. Dies gilt auch dann, wenn die Sensoranordnung - z.B. über eine externe Energiequelle - von außen mit elektrischer Energie versorgt wird. Ferner werden beim genannten Stand der Technik die Rohsignale nur kurzzeitig erzeugt. Es ist also nur das Erreichen der vorbestimmten Stellung detektierbar. Ob das Drehelement danach in dieser Stellung verharrt oder sich weiterbewegt ist nicht erfassbar.

Die Vorgehensweise des Standes der Technik weist eine Reihe von Nachteilen auf. Die wesentlichsten Nachteile bestehen darin, dass zum einen nur Veränderungen der Drehstellung erfassbar sind, nicht aber Drehstellungen als solche und dass zum anderen bei schnelleren Drehbewegungen auf ein anderes Auswertungsverfahren umgeschaltet werden muss, weil das erste Energieerzeugungssystem, das mit der Sensoranordnung identisch ist, bei schnelleren Drehbewegungen nicht mehr zuverlässig arbeitet. Ferner ist beim bekannten Stand der Technik entweder die Drehrichtung nur durch eine komplizierte Auswertung der zeitlichen Abfolge der bei Erreichen einer der vorbestimmten Stellung erzeugten Rohsignale ermittelbar oder es ist ein komplexes System erforderlich, dessen Zuverlässigkeit im Dauerbetrieb Grenzen gesetzt sind.

Die Aufgabe der vorliegenden Erfindung besteht darin, einen Drehstellungsgeber zu schaffen, bei dem auf einfache Weise eine zuverlässige Ermittlung der Drehstellung und der Drehrichtung des Drehelements möglich ist.

Die Aufgabe wird durch einen Drehstellungsgeber gelöst, der eine Sensoranordnung mit mindestens zwei Sensoren und einer den Sensoren nachgeordneten Auswerteschaltung aufweist, mittels derer eine Drehstellung des Drehelements relativ zu einer Referenzstellung des Drehelements erfassbar ist,
- wobei in jeder möglichen Drehstellung des Drehelements von den Sensoren simultan Rohsignale lieferbar sind, anhand derer ermittelbar ist, um welchen von mehreren Winkelbereichen das Drehelement relativ zur Referenzstellung verdreht ist,
- wobei zumindest bei einer langsamen Drehbewegung von einem ersten Energieerzeugungssystem zwangsweise Energiepulse an die Sensoranordnung abgegeben werden, aufgrund derer die Sensoranordnung jeweils solange betreibbar ist, dass der Winkelbereich ermittelbar ist, um den das Drehelement bei Abgabe eines Energiepulses relativ zur Referenzstellung verdreht ist,
- wobei das erste Energieerzeugungssystem und das Drehelement derart miteinander gekoppelt sind, dass anhand zweier Winkelbereiche, die beim Abgeben unmittelbar aufeinanderfolgender Energiepulse ausschließlich anhand der Rohsignale ermittelt werden, eine eindeutige Drehrichtungserkennung des Drehelements möglich ist.

Der entscheidende Vorteil des erfindungsgemäßen Drehstellungsgebers besteht darin, dass hierzu die Sensoranordnung und das erste Energieerzeugungssystem voneinander entkoppelt werden. Denn dadurch ist die Sensoranordnung unabhängig vom ersten Energieerzeugungssystem gestaltbar. Insbesondere kann damit die Zahl der von dem ersten Energieerzeugungssystem zwangsweise abgegebenen Energiepulse unabhängig von der Ausgestaltung der Sensoranordnung derart festgelegt werden, dass die eindeutige Drehrichtungserkennung des Drehelements stets möglich ist.

Ferner ist es aufgrund der Auswertung der in jeder möglichen Drehstellung simultan lieferbaren Rohsignalen möglich, die Drehstellung des Drehelements unabhängig von der Art der Versorgung der Sensoranordnung mit Energie stets ausschließlich anhand der zu einem Zeitpunkt simultan gelieferten Rohsignale zu ermitteln. Dies ist insbesondere deshalb von Vorteil, weil das erste Energieerzeugungssystem die zwangsweisen Energiepulse nur bis zu einer Grenzdrehzahl mit Sicherheit an die Sensoranordnung abgibt. Oberhalb der Grenzdrehzahl ist eine Versorgung der Sensoranordnung mit elektrischer Energie durch das erste Energieerzeugungssystem also nicht mehr sichergestellt.

Um auch oberhalb dieser Grenzdrehzahl eine Versorgung der Sensoranordnung mit elektrischer Energie zu gewährleisten, weist der Drehstellungsgeber daher in der Regel ein zweites Energieerzeugungssystem auf, das derart mit dem Drehelement gekoppelt ist, dass es spätestens ab dieser Grenzdrehzahl der Sensoranordnung kontinuierlich Energie zuführt. Ab der Grenzdrehzahl übernimmt also das zweite Energieerzeugungssystem die Energieversorgung der Sensoranordnung. Es ist zusätzlich auch möglich, dass der Drehstellungsgeber Versorgungsanschlüsse aufweist, mittels derer der Sensoranordnung von außen Energie zuführbar ist. Ein Wechsel des Auswertungsverfahrens bei einer Drehzahländerung oder einer Änderung des Energieversorgungsverfahrens ist dabei nicht erforderlich.

Die Rohsignale sind vorzugsweise binär oder ternär. Wenn die Rohsignale Binärsignale sind, sind die Winkelbereiche vorzugsweise gleich groß. Wenn die Rohsignale ternär sind, umfassen die Winkelbereich alternierend Grundwinkelbereiche und Zwischenwinkelbereiche, wobei die Grundwinkelbereiche größer als die Zwischenwinkelbereiche sind. Untereinander sind dann die Grundwinkelbereiche und die Zwischenwinkelbereiche wieder gleich groß.

Wenn die Auswerteschaltung derart ausgebildet ist, dass sie die von den Sensoren gelieferten Rohsignale auf Plausibilität prüft und bei Vorliegen einer Unplausibilität ein Fehlersignal ausgibt, arbeitet die Auswerteschaltung besonders zuverlässig.

Wenn die Sensoren Magnetfeldsensoren, insbesondere Hallsensoren, sind und das Drehelement eine magnetische Signatur mit mindestens zwei Signaturbereichen aufweist, benötigt die Sensoranordnung zum Betrieb besonders wenig Energie.

Die Signaturbereiche können bezüglich der Drehachse wahlweise radial oder axial magnetisiert sein. Sie sollten aber untereinander gleich groß sein.

Wenn das erste Energieerzeugungssystem und das Drehelement über Koppelmagnete miteinander gekoppelt sind, arbeitet der Drehstellungsgeber besonders zuverlässig. Die Koppelmagnete können wahlweise radial oder tangential magnetisiert sein.

Die Kopplung ist dabei besonders stark, wenn die Koppelmagnete tangential magnetisiert sind.

Je öfter das erste Energieerzeugungssystem einen Energiepuls abgibt, desto genauer kann der Winkelbereich aufgelöst werden. Es reicht aber aus, wenn das erste Energieerzeugungssystem und das Drehelement derart miteinander gekoppelt sind, dass das Drehelement zwischen zwei unmittelbar aufeinanderfolgenden Energiepulsen seine Drehstellung maximal um 120° ändert.

Wenn die Sensoranordnung zur Erfassung und Auswertung der Rohsignale getaktet betreibbar ist, ergibt sich ein besonders niedriger Energiebedarf der Sensoranordnung. Die Sensoren werden also, wenn keine kontinuierliche Energieversorgung gegeben ist, nur jeweils kurzzeitig mit Energie versorgt. Dadurch wird der Energieverbrauch der Sensoren reduziert. Die Sensoren werden somit in bestimmten Zeitabständen jeweils für eine kurze, definierte Zeit getaktet betrieben. Wesentlich ist hierbei unter anderem, dass die Sensoren synchron zueinander getaktet werden.

Erfolgt hingegen eine kontinuierliche Energieversorgung der Sensoranordnung, werden die Sensoren im Dauerbetrieb betrieben. Ein Umschalten in den getakteten Betrieb erfolgt erst beim Wegfall der kontinuierlichen Energieversorgung.

Üblicherweise ist der Auswerteschaltung ein Umdrehungszähler nachgeordnet, mittels dessen eine Anzahl von Umdrehungen des Drehelements ermittelbar ist.

Wenn der Umdrehungszähler zusammen mit der Sensoranordnung mit Energie versorgbar ist, der Umdrehungszähler einen elektrisch lösch- und schreibbaren Festwertspeicher aufweist und der Zählerstand und der ermittelte Winkelbereich bei Abgabe der Energiepulse an die Sensoranordnung noch während des jeweiligen Energiepulses in dem Festwertspeicher abgespeichert werden, ist unabhängig von der Art der Versorgung der Sensoranordnung mit elektrischer Energie gewährleistet, dass stets der aktuelle Umdrehungsstand bekannt und erfassbar ist.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung
- FIG 1: ein Blockschaltbild eines Drehstellungsgebers,
- FIG 2: eine Sensoranordnung mit einem Drehelement,
- FIG 3: eine Winkelbereichsverteilung,
- FIG 4: eine weitere Winkelbereichsverteilung,
- FIG 5: ein erstes Energieerzeugungssystem,
- FIG 6: einen Koppelmagneten und
- FIG 7: ein Ablaufdiagramm.

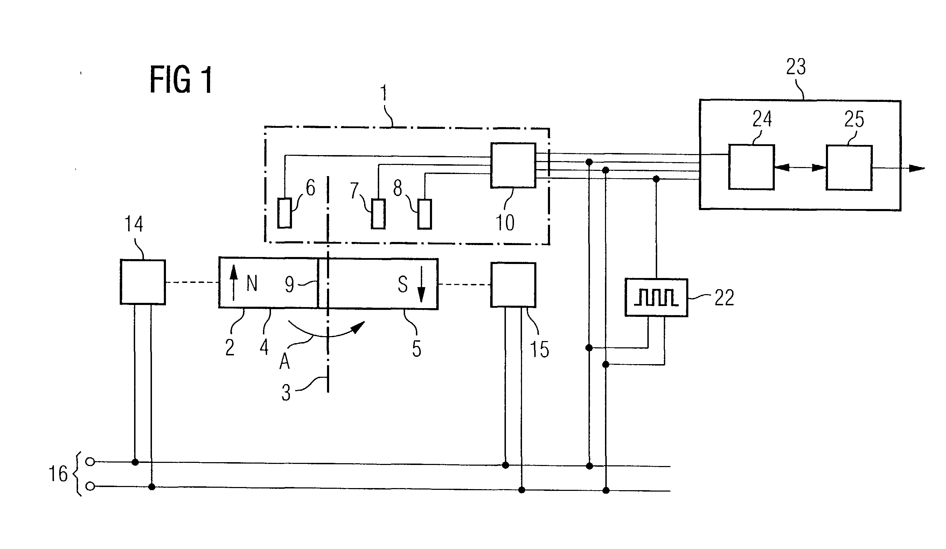

Gemäß FIG 1 weist ein Drehstellungsgeber eine feststehende Sensoranordnung 1 und ein Drehelement 2 auf. Das Drehelement 2 ist um eine Drehachse 3 drehbar, wie in FIG 1 durch einen Pfeil A angedeutet ist.

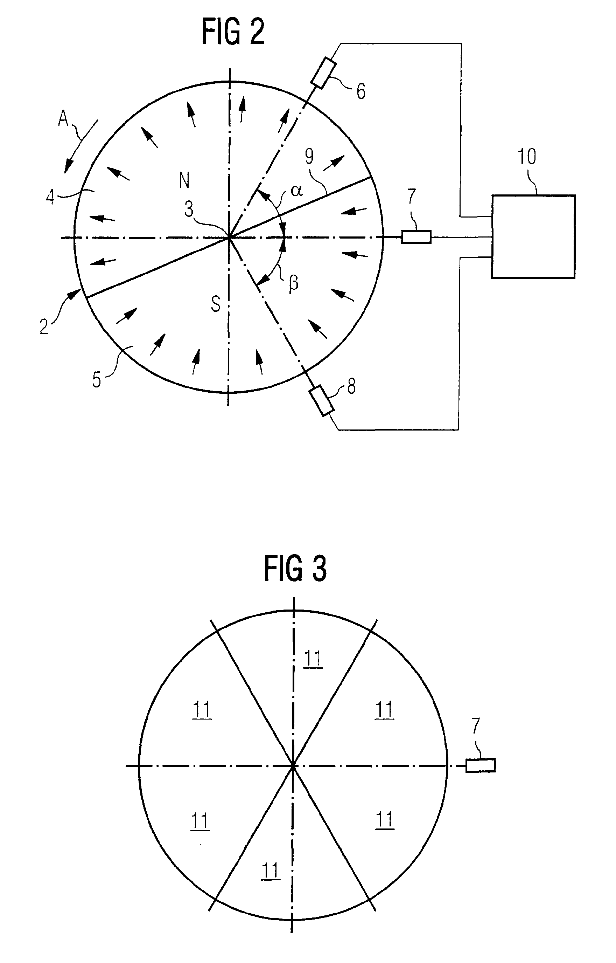

Die Sensoranordnung 1 weist drei Sensoren 6 - 8 auf. Die Sensoren 6 - 8 sind als Magnetfeldsensoren 6 - 8, vorzugsweise als Hallsensoren 6 - 8, ausgebildet. Wie aus FIG 2 ersichtlich ist, sind die drei Sensoren 6 - 8 bezüglich der Drehachse 3 gegeneinander winkelversetzt angeordnet. Vorzugsweise sind die Relativwinkel α, β derart gewählt, dass sie gleich 180° geteilt durch die Zahl der Sensoren 6 - 8 ist. Im vorliegenden Fall sind die Relativwinkel α, β also 60°.

Das Drehelement 2 weist zwei Signaturbereiche 4, 5 auf. Die Signaturbereiche 4, 5 sind untereinander gleich groß und entgegengesetzt magnetisiert. Sie erstrecken sich jeweils über 180°. Sie sind durch einen kleinen Übergangsbereich 9 voneinander getrennt. Wie durch die Buchstaben N und S in den FIG 1 und 2 angedeutet ist, ist den Sensoren 6 - 8 daher je nach Signaturbereich 4, 5 entweder der magnetische Nordpol N oder der magnetische Südpol S zugewandt.

Gemäß FIG 1 sind die Sensoren 6 - 8 oberhalb des Drehelements 2 angeordnet, gemäß FIG 2 neben dem Drehelement 2. Hiermit korrespondierend sind die Signaturbereiche 4, 5 bei der Darstellung gemäß FIG 1 bezüglich der Drehachse 3 axial und bei der Darstellung gemäß FIG 2 radial magnetisiert. Bei axialer Magnetisierung könnten die Sensoren 6 - 8 auch unterhalb des Drehelements 2 angeordnet sein.

Mittels der Sensoren 6 - 8 ist eine Drehstellung des Drehelements 2 relativ zu einer Referenzstellung des Drehelements 2 erfassbar. Als Referenzstellung ist dabei willkürlich festgelegt, dass der Übergangsbereich 9 zwischen den beiden Signaturbereichen 4, 5 genau auf das mittlere der Sensorelemente 6 - 8 zeigt und das Sensorelement 6 das Vorhandensein des Signaturbereichs 4 erfasst.

Aufgrund der Ausbildung des Drehelements 2 mit zwei Signaturbereichen 4, 5, die sich jeweils über 180° erstrecken, sind in jeder möglichen Drehstellung des Drehelements 2 von den Sensoren 6 - 8 simultan Rohsignale lieferbar, die sinnvoll auswertbar sind. Die Rohsignale sind dabei vorzugsweise binär oder ternär. Sie werden einer den Sensoren 6 - 8 nachgeordneten Auswerteschaltung 10 zugeführt, die dann anhand der zugeführten Rohsignale einen Winkelbereich 11 - 13 ermittelt, um den das Drehelement 2 relativ zur Referenzstellung verdreht ist.

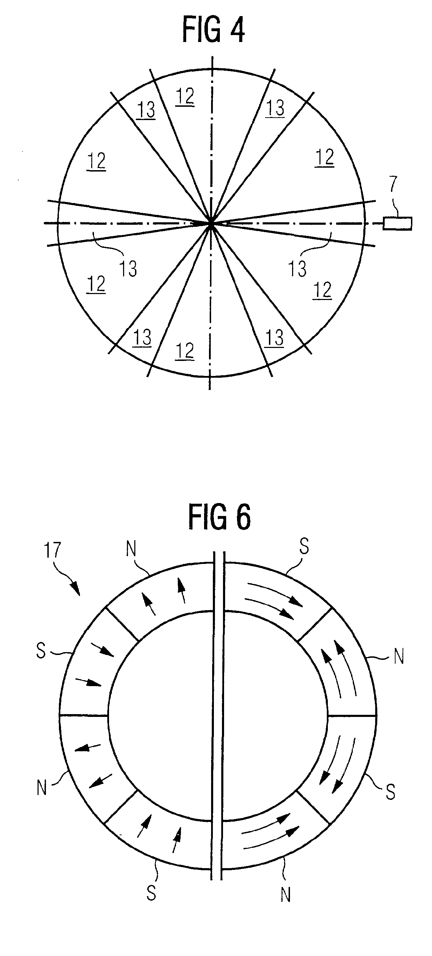

Wenn die Rohsignale Binärsignale sind, erfassen sie entweder eindeutig die Anwesenheit eines der beiden Signaturbereiche 4 bzw. 5 oder sie erfassen die Anwesenheit dieses Signaturbereiches 4 bzw. 5 nicht. Dann ist aufgrund der Rohsignale ermittelbar, um welchen von mehreren im wesentlichen gleich großen Winkelbereichen 11 das Drehelement 2 relativ zur Referenzstellung verdreht ist. Die Winkelbereiche 11 sind in FIG 3 dargestellt. Sie erstrecken sich von 0° bis 60°, von 60° bis 120° usw.

Wenn die Sensoren 6 - 8 ternäre Rohsignale liefern, erfassen sie entweder eindeutig die Anwesenheit eines der beiden Signaturbereiche 4, 5 oder das Vorhandensein des Übergangsbereichs 9. In diesem Fall ist aufgrund der Rohsignale ein Vollkreis alternierend in Grundwinkelbereiche 12 und Zwischenwinkelbereiche 13 unterteilt. Die Grundwinkelbereiche 12 und die Zwischenwinkelbereiche 13 sind dabei untereinander gleich groß. Die Grundwinkelbereiche 12 sind ferner in der Regel größer als die Zwischenwinkelbereiche 13. Beispielsweise betragen die Zwischenwinkelbereiche 13 15°, wohingegen die Grundwinkelbereiche 12 45° umfassen. Grund- und Zwischenwinkelbereiche 12, 13 sind schematisch in FIG 4 dargestellt. Die Grundwinkelbereiche 12 sind dabei dadurch bestimmt, dass alle drei Sensoren 6 - 8 die Anwesenheit eines der Signaturbereiche 4, 5 detektieren, die Zwischenwinkelbereiche 13 dadurch, dass einer der Sensoren 6 - 8 den Übergangsbereich 9 erfasst.

Zur Versorgung der Sensoranordnung 1 mit elektrischer Energie weist der Drehstellungsgeber ein erstes und ein zweites Energieerzeugungssystem 14, 15 sowie Versorgungsanschlüsse 16 auf. Über die Versorgungsanschlüsse 16 ist der Sensoranordnung 1 von außen elektrische Energie zuführbar. Wenn dies erfolgt, wird die Sensoranordnung 1 permanent betrieben.

Das zweite Energieerzeugungssystem 15 ist als übliche Induktionsspule mit gegebenenfalls nachgeschaltetem Gleichrichter und Spannungsregler ausgebildet. Im zweiten Energieerzeugungssystem 15 wird über einen drehbaren Magneten eine Spannung induziert, die dann der Sensoranordnung 1 zugeführt wird. Der drehbare Magnet kann dabei, wie in FIG 1 dargestellt, mit dem Drehelement 2 identisch sein. Es kann aber auch ein anderer mit dem Drehelement 2 direkt oder indirekt gekoppelter Magnet Verwendung finden.

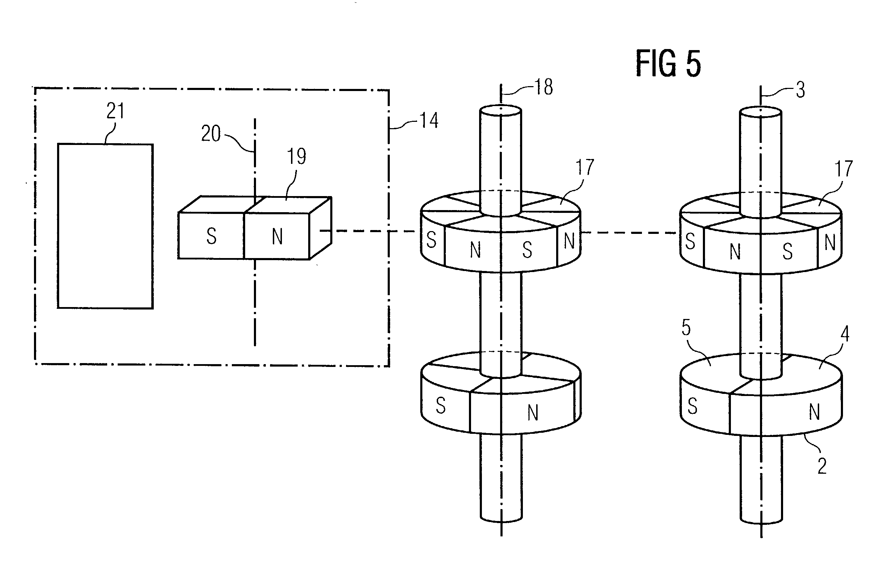

Das zweite Energieerzeugungssystem 15 ist derart ausgelegt und mit dem Drehelement 2 gekoppelt, dass es spätestens ab einer Grenzdrehzahl hinreichend viel Energie abgibt, um die Sensoranordnung 1 kontinuierlich mit elektrischer Energie zu versorgen. Unterhalb der Grenzdrehzahl ist dies hingegen nicht gewährleistet. Um auch unterhalb dieser Grenzdrehzahl, also bei langsamen Drehbewegungen eine Drehbewegung des Drehelements 2 mit Sicherheit erfassen zu können, ist das erste Energieerzeugungssystem 14 vorgesehen. Es ist in FIG 5 schematisch dargestellt.

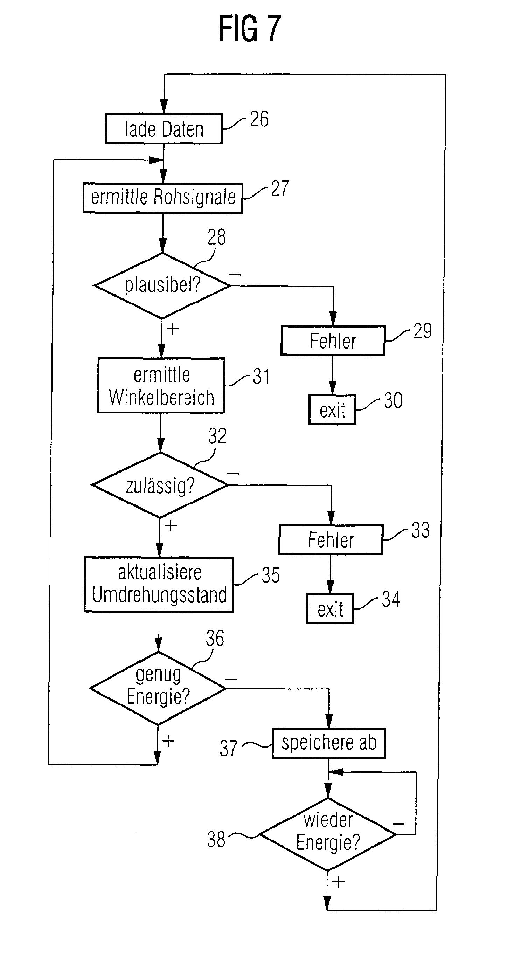

Das erste Energieerzeugungssystem 14 weist gemäß FIG 5 Koppelmagnete 17 auf. Einer der Koppelmagnete 17 ist mit dem Drehelement 2 drehfest verbunden, der andere Koppelmagnet 17 ist auf einer koaxial zur Drehachse 3 verlaufenden Zwischenachse 18 drehbar gelagert. Die Koppelmagnete 17 sind entweder, wie in der linken Hälfte von FIG 6 dargestellt, radial oder aber, wie in der rechten Hälfte von FIG 6 dargestellt, vorzugsweise tangential magnetisiert. Die Koppelmagnete 17 weisen dabei mindestens sechs Signaturbereiche auf, z. B. zwölf Signaturbereiche oder, wie in den FIG 5 und 6 dargestellt, acht Signaturbereiche. Über die Koppelmagnete 17 ist das erste Energieerzeugungssystem 14 mit dem Drehelement 2 gekoppelt.

Der in der Zwischenachse 18 drehbar gelagerte Koppelmagnet 17 wirkt auf einen Induktionsmagneten 19, der vorzugsweise als magnetischer Dipol 19 ausgebildet ist und bezüglich einer Dipolachse 20 drehbar gelagert ist. Auch die Dipolachse 20 ist parallel zur Drehachse 3 orientiert. Der magnetische Dipol 19 steht mit einer Induktionsspule 21 in Wirkverbindung.

Zur Erläuterung der Funktionsweise des ersten Energieerzeugungssystems 14 wird im Folgenden angenommen, dass der magnetische Dipol 19 wie in FIG 5 dargestellt orientiert ist. Sein Nordpol ist also auf den linken Koppelmagneten 17 hin orientiert. Wenn nun der linke Koppelmagnet 17 aufgrund der Drehung des Drehelements 2 und damit verbunden des rechten Koppelmagneten 17 gedreht wird, nähert sich ein Nordpol des linken Koppelmagneten 17 dem magnetischen Dipol 19. Der magnetische Dipol 19 wird dabei zunächst durch eine Haltekraft eines der Induktionsspule 21 zugeordneten Weicheisenkerns in seiner Stellung gehalten. Zu einem gewissen Zeitpunkt werden die abstoßenden Kräfte zwischen den Nordpolen des magnetischen Dipols 19 und dem gegenüberliegenden Nordpol des linken Koppelmagneten 17 aber so groß, dass der magnetische Dipol umklappt.

Auch bei einer noch so langsamen Drehbewegung des Drehelements 2 erfolgt dieses Umklappen des magnetische Dipols 19 dabei schlagartig. Hierdurch wird in der Induktionsspule 21 ein Spannungspuls erzeugt, der als zwangsweiser Energiepuls an die Sensoranordnung 1 abgegeben wird. Aufgrund dieses Energiepulses ist die Sensoranordnung 1 dann solange betreibbar, dass die Rohsignale von den Sensoren 6 - 8 erfasst und an die Auswerteschaltung 10 übermittelbar sind. Die Auswerteschaltung 10 ist aufgrund des Energiepulses ferner in der Lage, anhand der Rohsignale den Winkelbereich 11 - 13 zu ermitteln, um den das Drehelement 2 bei Abgabe dieses Energiepulses relativ zur Referenzstellung verdreht ist.

In der Theorie ist das erste Energieerzeugungssystem 14 derart ausgelegt, dass der magnetische Dipol 19 nach dem schlagartigen Umklappen um 180° verdreht stehen bleibt, dass also nunmehr sein Südpol dem linken Koppelmagneten 17 zugewandt ist. In der Praxis ist dies aber nicht stets gewährleistet. In der Praxis kommt es auch vor, dass der magnetische Dipol 19 eine volle Umdrehung ausführt, also erneut der Nordpol dem linken Koppelmagneten 17 zugewandt ist.

Aus diesem Grund weist zumindest der rechte der Koppelmagnete 17 mindestens sechs Signaturbereiche auf. In der Regel erfolgt dann nämlich ein Umklappen des magnetischen Dipols 19 nach einer Drehung des Drehelements 2 um 60°. Aber auch wenn der magnetische Dipol 19 beim Umklappen eine volle Umdrehung ausführt, ändert das Drehelement 2 zwischen zwei unmittelbar aufeinanderfolgenden Energiepulsen seine Drehstellung maximal um 120°. Bei acht bzw. zwölf Signaturbereichen wird dementsprechend in der Regel alle 45° bzw. 30° ein Energiepuls abgegeben, spätestens aber nach 90° bzw. 60°. In allen oben aufgeführten Fällen sind somit das erste Energieerzeugungssystem 14 und das Drehelement 2 derart miteinander gekoppelt, dass anhand zweier Winkelbereiche 11 - 13, die beim Abgeben unmittelbar aufeinanderfolgender Energiepulse ausschließlich anhand der simultan erfassbaren Rohsignale ermittelt werden, eine eindeutige Drehrichtungserkennung des Drehelements 2 möglich ist.

Das erste Energieerzeugungssystem 14 ist derart ausgelegt, dass es mindestens bis zur Grenzdrehzahl, ab der die Energieversorgung der Sensoranordnung 1 durch das zweite Energieerzeugungssystem 15 sichergestellt ist, zuverlässig die zwangsweisen Energiepulse abgibt. Somit ist die Energieversorgung der Sensoranordnung 1 bei jeder Drehzahl hinreichend gewährleistet.

Wie obenstehend ausgeführt, ist die Ermittlung des Winkelbereichs 11 - 13 aufgrund statischer, zu einem Zeitpunkt simultan gelieferter Rohsignale möglich. Diese Ermittlung der Drehstellung des Drehelements 2 kann somit stets ausgeführt werden, also unabhängig von der Art der Versorgung der Sensoranordnung 1 mit elektrischer Energie.

Gemäß FIG 1 weist der Drehstellungsgeber einen Taktgeber 22 auf. Der Taktgeber 22 wird ebenfalls mit Energie versorgt. Sein Ausgangstakt wird der Sensoranordnung 1 zugeführt. Die Sensoranordnung 1 ist somit zur Erfassung und Auswertung der Rohsignale getaktet betreibbar. Dies ist besonders dann von Vorteil, wenn der Energieverbrauch minimiert werden muss, weil nur die Energiepulse des ersten Energieerzeugungssystems 14 zur Verfügung stehen. Aber auch bei Versorgung durch das zweite Energieerzeugungssystem 15 oder bei externer Energieversorgung ist diese Betriebsweise von Vorteil.

Der Auswerteschaltung 10 ist ein Umdrehungszähler 23 nachgeordnet. Mittels des Umdrehungszählers 23 ist in bekannter Weise anhand zweier aufeinanderfolgender erfasster Drehstellungen des Drehelements 2 eine Drehrichtung des Drehelements 2 erkennbar. Die Drehstellung des Drehelements 2 ist dabei durch den ermittelten Winkelbereich 11 - 13 gegeben. Aus der erfassten Drehrichtung und der Drehstellung kann dann eine Anzahl von Umdrehungen des Drehelements 2 ermittelt werden. Diese Ermittlung ist allgemein bekannt, so dass diese Ermittlung nachfolgend nicht detailliert beschrieben wird. Von Bedeutung ist aber, dass der Umdrehungszähler 23 zusammen mit der Sensoranordnung 1 mit elektrischer Energie versorgbar ist. Er wird also gemeinsam mit der Sensoranordnung 1 betrieben.

Intern weist der Umdrehungszähler 23 einen Verarbeitungsschaltkreis 24 sowie einen Festwertspeicher 25 auf. Der Festwertspeicher 25 ist dabei als elektrisch lösch- und schreibbarer Festwertspeicher 25 ausgebildet.

Im Festwertspeicher 25 sind die alte Drehstellung des Drehelements 2 und ein Umdrehungsstand abgespeichert. Beim Zuführen einer neuen Drehstellung (was implizit eine Versorgung des Umdrehungszählers 23 mit elektrischer Energie voraussetzt) werden die alte Drehstellung und der Umdrehungsstand aus dem Festwertspeicher 25 in den Verarbeitungsschaltkreis 24 eingelesen. Aus der neuen Drehstellung, die von der Sensoranordnung 1 übermittelt wird, und der alten Drehstellung wird dann die Drehrichtung ermittelt und gegebenenfalls der Umdrehungsstand aktualisiert.

Der Verarbeitungsschaltkreis 24 speichert die neue Drehstellung des Drehelements 2 und gegebenenfalls einen aktualisierten Umdrehungsstand ebenfalls im Festwertspeicher 25 ab. Sowohl das Ermitteln der aktualisierten Werte als auch das Abspeichern im Festwertspeicher 25 erfolgt dabei gegebenenfalls noch während des jeweiligen Energiepulses. Aus dem Festwertspeicher 25 sind die Werte dann nach außen ausgebbar.

Gemäß FIG 7 wird zum Ermitteln der Drehstellung und zum Aktualisieren des Umdrehungsstandes wie folgt verfahren:

Zunächst werden in einem Schritt 26 die alte Drehstellung und der alte Umdrehungsstand aus dem Festwertspeicher 25 ausgelesen. Sodann werden in einem Schritt 27 die Rohsignale ermittelt. Sodann wird in einem Schritt 28 überprüft, ob die Rohsignale plausibel sind. Wenn beispielsweise die Rohsignale der Sensoren 6 und 8 identisch sind, muss auch das Rohsignal des mittleren Sensors 7 diesen Wert aufweisen. Ist dies nicht der Fall, wird in einem Schritt 29 eine Fehlermeldung ausgegeben und in einem Schritt 30 die weitere Abarbeitung der Routine eingestellt.

Ansonsten wird in einem Schritt 31 der Winkelbereich 11 - 13 ermittelt, um den das Drehelement 2 relativ zur Referenzstellung verdreht ist. Sodann wird in einem Schritt 32 durch Vergleich mit dem beim vorherigen Durchlauf ermittelten Winkelbereich 11 - 13 ermittelt, ob der nunmehr ermittelte Winkelbereich 11 - 13 zulässig ist. Es wird also geprüft, ob die Differenz der beiden Winkelbereiche 11 - 13 im zulässigen Rahmen liegt. Ist dies nicht der Fall, wird in einem Schritt 33 wieder eine Fehlermeldung ausgegeben und in einem Schritt 34 die weitere Abarbeitung der Routine eingestellt.

Ansonsten wird in einem Schritt 35 der Umdrehungsstand aktualisiert. Sodann wird in einem Schritt 36 überprüft, ob die vorhandene Energie für einen erneuten Durchlauf der Routine gemäß FIG 7 ausreicht. Ist dies der Fall, wird zum Schritt 27 zurückgesprungen.

Anderenfalls werden in einem Schritt 37 die aktuellen Werte im Festwertspeicher 25 abgespeichert und gemäß einem Schritt 38 abgewartet, dass erneut Energie zum Betreiben der Sensoranordnung 1 zur Verfügung steht. Ist dies der Fall, wird zum Schritt 26 zurückgesprungen.

Selbstverständlich sind Abwandlungen des obenstehend beschriebenen Prinzips möglich, ohne den Grundgedanken der vorliegenden Erfindung zu verlassen.

So kann ggf. sowohl die Zahl und Anordnung der Sensoren 6 - 8 variiert werden. Mindestens zwei Sensoren 6 - 8 müssen aber vorhanden sein. Auch können die Sensoren 6 - 8 um andere Relativwinkel α, β gegeneinander versetzt sein. Auch kann das Drehelement 2 mehr als zwei Signaturbereiche 4, 5 aufweisen. Schließlich kann auch der rechte Koppelmagnet 17 mehr als sechs Signaturen aufweisen. Das obenstehend angeführte Beispiel mit zwei Signaturbereichen 4, 5 des Drehelements 2, drei um 60° versetzten Sensoren 6 - 8 und mindestens sechs Signaturen des rechten Koppelmagneten 17 ist aber das einfachste.

Schließlich kann der Drehstellungsgeber in an sich bekannter Weise mit einem Umdrehungsauflöser kombiniert werden, der innerhalb einer Umdrehung eine sehr genaue Auflösung des momentanen Winkels ermöglicht.

## Patentansprüche

1. Drehstellungsgeber zum Erfassen einer Drehbewegung eines um eine Drehachse (3) drehbaren Drehelements (2),
- wobei der Drehstellungsgeber eine Sensoranordnung (1) mit mindestens zwei Sensoren (6-8) und einer den Sensoren (6 - 8) nachgeordneten Auswerteschaltung (10) aufweist, mittels derer eine Drehstellung des Drehelements (2) relativ zu einer Referenzstellung des Drehelements (2) erfassbar ist,
- wobei in jeder möglichen Drehstellung des Drehelements (2) von den Sensoren (6-8) simultan Rohsignale lieferbar sind, anhand derer ermittelbar ist, um welchen von mehreren Winkelbereichen (11-13) das Drehelement (2) relativ zur Referenzstellung verdreht ist,
- wobei zumindest bei einer langsamen Drehbewegung von einem ersten Energieerzeugungssystem (14) zwangsweise Energiepulse an die Sensoranordnung (1) abgegeben werden, aufgrund derer die Sensoranordnung (1) jeweils solange betreibbar ist, dass der Winkelbereich (11-13) ermittelbar ist, um den das Drehelement (2) bei Abgabe eines Energiepulses relativ zur Referenzstellung verdreht ist,
- wobei das erste Energieerzeugungssystem (14) und das Drehelement (2) derart miteinander gekoppelt sind, dass anhand zweier Winkelbereiche (11-13), die beim Abgeben unmittelbar aufeinanderfolgender Energiepulse ausschließlich anhand der Rohsignale ermittelt werden, eine eindeutige Drehrichtungserkennung des Drehelements (2) möglich ist.

2. Drehstellungsgeber nach Anspruch 1, **dadurch gekennzeichnet, dass** die Winkelbereiche (11) gleich groß sind.

3. Drehstellungsgeber nach Anspruch 1, **dadurch gekennzeichnet, dass** die Winkelbereiche (12, 13) bezüglich der Drehstellung des Drehelements (2) alternierend Grundwinkelbereiche (12) und Zwischenwinkelbereiche (13) umfassen und dass die Grundwinkelbereiche (12) größer als die Zwischenwinkelbereiche (13) sind.

4. Drehstellungsgeber nach Anspruch 3, **dadurch gekennzeichnet, dass** die Grundwinkelbereiche (12) und die Zwischenwinkelbereiche (13) untereinander gleich groß sind.

5. Drehstellungsgeber nach einem der obigen Ansprüche, **dadurch gekennzeichnet, dass** die Auswerteschaltung (10) derart ausgebildet ist, dass sie die von den Sensoren (6-8) gelieferten Rohsignale auf Plausibilität prüft und bei Vorliegen einer Unplausibilität ein Fehlersignal ausgibt.

6. Drehstellungsgeber nach einem der obigen Ansprüche, **dadurch gekennzeichnet, dass** das erste Energieerzeugungssystem (14) die zwangsweisen Energiepulse mindestens bis zu einer Grenzdrehzahl an die Sensoranordnung (1) abgibt und dass der Drehstellungsgeber ein zweites Energieerzeugungssystem (15) aufweist, das derart mit dem Drehelement (2) gekoppelt ist, dass es der Sensoranordnung (1) spätestens ab der Grenzdrehzahl kontinuierlich Energie zuführt.

7. Drehstellungsgeber nach einem der obigen Ansprüche, **dadurch gekennzeichnet, dass** er Versorgungsanschlüsse (16) aufweist, mittels derer der Sensoranordnung (1) von außen Energie zuführbar ist.

8. Drehstellungsgeber nach Anspruch 6 oder 7, **dadurch gekennzeichnet, dass** unabhängig von der Art der Versorgung der Sensoranordnung (1) mit Energie die Drehstellung des Drehelements (2) stets ausschließlich anhand der zu einem Zeitpunkt simultan gelieferten Rohsignale ermittelt wird.

9. Drehstellungsgeber nach einem der obigen Ansprüche, **dadurch gekennzeichnet, dass** die Sensoren (6-8) Magnetfeldsensoren (6-8), insbesondere Hallsensoren (6-8), sind und dass das Drehelement (2) eine magnetische Signatur mit mindestens zwei Signaturbereichen (4,5) aufweist.

10. Drehstellungsgeber nach Anspruch 9, **dadurch gekennzeichnet, dass** die Signaturbereiche (4, 5) bezüglich der Drehachse (3) radial oder axial magnetisiert sind.

11. Drehstellungsgeber nach Anspruch 9 oder 10, **dadurch gekennzeichnet, dass** die Signaturbereiche (4, 5) untereinander gleich groß sind.

12. Drehstellungsgeber nach einem der obigen Ansprüche, **dadurch gekennzeichnet, dass** das erste Energieerzeugungssystem (14) und das Drehelement (2) über Koppelmagnete (17) miteinander gekoppelt sind.

13. Drehstellungsgeber nach Anspruch 12, **dadurch gekennzeichnet, dass** die Koppelmagnete (17) radial oder tangential magnetisiert sind.

14. Drehstellungsgeber nach einem der obigen Ansprüche, **dadurch gekennzeichnet, dass** das erste Energieerzeugungssystem (14) und das Drehelement (2) derart miteinander gekoppelt sind, dass das Drehelement (2) zwischen zwei unmittelbar aufeinanderfolgenden Energiepulsen seine Drehstellung maximal um 120° ändert.

15. Drehstellungsgeber nach einem der obigen Ansprüche, **dadurch gekennzeichnet, dass** die Sensoranordnung (1) zur Erfassung und Auswertung der Rohsignale getaktet betreibbar ist.

16. Drehstellungsgeber nach einem der obigen Ansprüche, **dadurch gekennzeichnet, dass** der Auswerteschaltung (10) ein Umdrehungszähler (23) nachgeordnet ist, mittels dessen eine Anzahl von Umdrehungen des Drehelements (2) ermittelbar ist.

17. Drehstellungsgeber nach Anspruch 16, **dadurch gekennzeichnet, dass** der Umdrehungszähler (23) zusammen mit der Sensoranordnung (1) mit Energie versorgbar ist, dass der Umdrehungszähler (23) einen elektrisch lösch- und schreibbaren Festwertspeicher (25) aufweist und dass der Zählerstand und der ermittelte Winkelbereich (11 - 13) bei Abgabe der Energiepulse an die Sensoranordnung (1) noch während des jeweiligen Energiepulses in dem Festwertspeicher (25) abgespeichert werden.
